(19) Europäisches Patentamt
European Patent Office
Office européen des brevets

(11) EP 3 397 931 B1

(12) EUROPEAN PATENT SPECIFICATION

(45) Date of publication and mention of the grant of the patent:
01.07.2020 Bulletin 2020/27

(51) Int Cl.:
G01K 7/42 (2006.01)   H02J 3/14 (2006.01)

(21) Application number: 16825918.2

(22) Date of filing: 21.12.2016

(86) International application number:
PCT/NL2016/050901

(87) International publication number:
WO 2017/116230 (06.07.2017 Gazette 2017/27)

(54) **METHOD FOR DETERMINING THE ACTUAL TEMPERATURE ASSOCIATED WITH A THERMAL ASSET**

VERFAHREN ZUR ERMITTLUNG DER AKTUELLEN TEMPERATUR IM ZUSAMMENHANG MIT EINEM THERMISCHEN VERMÖGENSWERT

PROCÉDÉ POUR DÉTERMINER LA TEMPÉRATURE RÉELLE ASSOCIÉE À UN ACTIF THERMIQUE

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 28.12.2015 NL 2016045

(43) Date of publication of application:
07.11.2018 Bulletin 2018/45

(73) Proprietor: Peeeks B.V.
3032 AC, Rotterdam (NL)

(72) Inventors:
• ROBERS, Egbert Wouter Joghum
3111 CD Schiedam (NL)
• BEIJER, David
2612 JK Delft (NL)
• VERMEER, Kaz Marc
2629 JD Delft (NL)

(74) Representative: Patentwerk B.V.
P.O. Box 1514
5200 BN 's-Hertogenbosch (NL)

(56) References cited:
US-A- 4 389 577          US-A1- 2004 093 125
US-A1- 2007 021 874    US-A1- 2012 049 639

## Description

The present invention relates to a method for determining the actual temperature associated with a thermal asset and method and device for controlling a thermal asset.

An electrical grid in itself cannot store energy. At any moment, the amount of electricity generated and put into the grid has to be equal to the amount of electricity drawn by energy consumers. If there is a shortage (the grid as a whole needs more electricity than what is generated) this can lead to a dropping of voltage in the grid, also called a brown-out. Brown-outs can damage equipment connected to the grid. Also, the whole grid or parts thereof can experience black-outs: when this occurs the energy transport comes to a full stop and the grid has to be started up completely. If there is a surplus of electricity (i.e. more electricity is generated than what is consumed) this can lead to over voltage, which can also damage equipment connected to or part of the grid. Also these over voltages can result in tripping of safeguards, creating a black out. Surpluses or shortages also have other effects on the grid besides the voltage drops or spikes. The spinning mass present in generators connected to the grid experiences a larger resistance, as the load on the grid is larger than was intended. This leads the generators to slow down, which in turns leads to a lower frequency in the grid, as the rotational speed of these generators is tied directly to the grid frequency. This poses an additional reason to keep the grid balanced: some equipment uses this grid frequency as a time keeping mechanism.

Keeping stability of the grid is not easy, and the complexity of this task is increasing. Not only is the amount of generators and consumers running in the millions, but many of the consumers are not under any form of control by the parties responsible for keeping the grid stable: any individual can at will switch on or off their light, water heater, computer or other appliance. On top of this, the amount of electricity consuming assets is ever increasing, and due to the prices of photovoltaic panels dropping, the amount of electricity generated out of control of utilities or grid operators is also increasing. Due to the increase in photovoltaic and wind generators driven by government incentives to promote clean energy generation the relative amount of uncontrollable generation compared to controlled generation is increasing: wind and solar is strongly depending on weather circumstances.

Most countries have a national organization charged with the task to keep the national grid balanced, the national grid operator or Transmission System Operator (TSO). These grid operators use a multitude of ways to do this such as multilateral agreements with large energy consumers such as steel mills, rewards for large consumers that implement frequency-control or parties that are willing to run their emergency power generators upon the request of the grid operator.

Another tool used to regulate grid balance is by using an open imbalance market where real-time electricity prices keep the grid stable: in such a system energy consumers can choose to buy their electricity from a spot market where a price for electricity is determined multiple times per day, variations exist ranging from a price every minute to pricing per hour. This way energy consuming parties can be incentivized to schedule their consumption based on the actual state of the grid: a shortage of electricity will lead to high prices which will hopefully lead parties to postpone their electricity consuming processes, whereas surpluses will lead to low or even negative prices, leading to people receiving money for consuming electricity. If parties have processes that can be started quickly this should lead them to put these surpluses to good use. Responding to the national demand for electricity is called Demand Response.

In the broad landscape of home appliances and office systems, one particular group of electric devices holds a large potential for participation in the imbalance market. Devices in this group are known as thermal assets: systems used to control the temperature of a space or a certain thermal mass within a certain control space, like refrigerators, air conditioners, electric heaters et cetera. Such systems possess a thermal buffer: they have the ability to store their electric energy in the thermal mass. Because of this ability, the power consumption of these devices is flexible within a certain range. To illustrate: a regular refrigerator starts cooling when its internal thermal mass' temperature reaches a certain threshold value. The refrigerator's power is used to cool the refrigerator's internals until the temperature reaches the other threshold. If one were to imagine a short power-outage, halfway through the cooling cycle, one could imagine the temperature would start rising again. As long as the power re-establishes before the temperature trespasses the upper threshold, the refrigerator can simply restart its cooling mechanism, without any negative effects on the stored products. Simply put: as long as the power-outage happens during a convenient period, it has no significant impact on the refrigerator's performance. This means the power-outages could be imposed on purpose, during times of shortages on the national grid, participating in the imbalance market. In order to determine whether the instantaneous temperature allows for participation, this temperature needs to be known. For home appliances however, adjustments to existing equipment forms a large entry barrier. US 2004/0093125 A1 discloses a power management apparatus for a reach-in cooler. Electric current levels of the cooler are measured to determine the duration of ON and OFF time periods. The results are used to calculate a characteristic cycle time, which is used in determining a maximized shutdown time period.

It is therefore a goal of the present invention to provide a method to determine the temperature state, without the need for any hardware adjustments, enabling large-scale introduction of currently operating thermal assets to the imbalance markets.

The invention thereto proposes a method for determining a normalised actual temperature state associated with a thermal asset, wherein the temperature is in a regular operating mode at a minimum at the beginning of the rise time and at a maximum at the end of the rise time, the method comprising determining, of an electric power consumption of a thermal asset which has a regular operating mode wherein it is repeatedly switched on and off with a predetermined duty cycle, a rise time in the regular operating mode, a fall time in the regular operating mode, defining the temperature at the beginning of the rise time "0" and at the end of the rise time "1", defining the actual temperature state at a moment after the regular operating mode equal to the product of the cumulative rise time since the end of the last fall time divided by the rise time in the regular operating mode minus the cumulative fall time since the end of the last fall time times divided by the fall time in the normal operating mode.

The current invention thus proposes a system that determines the current state of a thermal device based on its power consumption profile with the aim of allocating instantaneous flexibility in a thermal asset with the purpose of participation in demand-response actions, without the need for any adjustments to the thermal asset itself, like the inclusion of sensors.

The rise time corresponds with a raising temperature, which may in a heating appliance be the "on" time of the asset, while in a cooling appliance the fall-time may be the "on" time. The temperature associated with a thermal asset may be the temperature of a space or room, for instance the internal temperature of a refrigerator or the temperature of a room subject to heating.

In order to stay up-to-date, the method according to the invention may comprise re-determining the rise time in the regular operating mode and the fall time in the regular operating mode after a predetermined time interval.

The invention further relates to a method for controlling the power consumption of a thermal asset, comprising the steps of determining the normalised actual temperature associated with the thermal asset according to a method as described above, determining a maximum allowable exceedance of the normalised temperature and if the normalised actual temperature is beneath the maximum exceedance, deciding that the power of the thermal asset may be temporarily cut off.

The actual cutting off the power takes place in response to grid parameters, such as the grid load. The method may further comprise using an energy price as an indicator for a grid load, since the actual energy price is often related to the load of the grid. As a response, the method may comprise temporarily disconnecting the thermal asset from the grid when the grid load is high.

The invention further relates to an apparatus for controlling a thermal asset using a method as described above, comprising a first power connection, for receiving power from a grid, a second power connection, for delivering power to a thermal asset, a power-measurement device for measuring the power consumption of the thermal asset; a computing device, for performing the method according to values determined by the power-measurement device and a control system for controlling the power.

The apparatus may be embodied as a switchable power plug with an on-board micro-chip, a power consumption data storage and an internet connection, where the internet connection provides a connection to a computing device providing grid load information such as instantaneous electricity prices, also known as the imbalance price. Said micro-chip may be arranged for analysing data locally.

The apparatus may also be configured to receive instructions from the computing device regarding when and for how long the power of the thermal asset has to be switched off or on or even for switching on the thermal asset for creating a two-way demand response device, which can both shed and increase electric load.

Power consumption data may only be saved when a significant deviation in power consumption is detected.

The apparatus may further comprise a model of a thermal asset, based on its historic power cycles, including at least the average on and off time during the power cycles, as well as respective power consumption levels during these periods.

The invention will now be elucidated into more detail with reference to the following figures. Herein:

- Figure 1 shows a dead band scheme of a thermal assets power temperature;
- Figure 2 shows an embodiment of the present invention;
- Figure 3 shows a sample of a duty cycle;
- Figure 4 shows a temperature of the asset with the duty cycle from figure 3; and
- Figure 5 displays a switching scheme for a refrigerator.

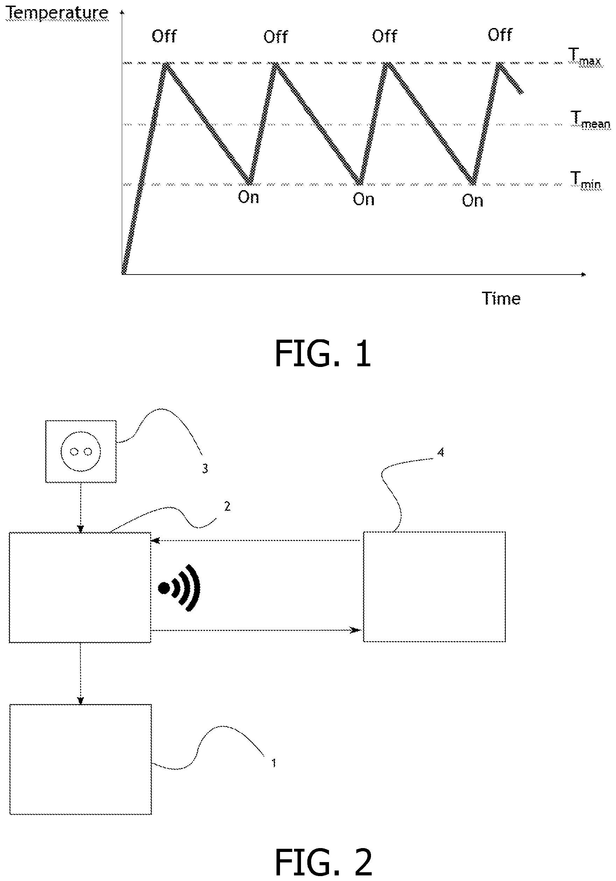

Figure 1 shows a dead band scheme of a thermal assets power temperature. Initially, the presented system will monitor a thermal asset's power consumption. The collected data will represent the asset's duty cycle, which subsequently be analysed. Most thermal assets follow a dead band scheme as depicted in figure 1.

The temperature in such devices fluctuates between two values, within the so-called dead band. By expressing the temperature difference between the current temperature T and the lower limit $T_{low}$, the current temperature can be normalized as:

$$T_n = \frac{T - T_{low}}{T_{high} - T_{low}}$$

This normalized temperature will vary from 0 to 1. The benefit of using this normalized temperature, is that it perfectly describes the temperature state, without requiring to know the exact values of $T_{low}$ and $T_{high}$. Looking at the duty cycle, one can assume that the normalized temperature will reach 0 after a full cooling or heating cycle, only to rise back to 1 before a new cycle is started. The current invention describes a system that observes a thermal asset, in order to learn about its duty cycles. After having done so, the system will be able to approximate the current state (between 0 and 1), based on previous duty cycles. Using this knowledge, the invention can assess whether the current state allows for participation in a demand-response action and if so, to what extent in time the device will remain available, before running into its dead band's limits.

Although normalized temperature varies from 0 to 1, it is also possible that the value is lower than 0 or higher than 1. This means that the temperature is outside the dead band.

Figure 2 shows an embodiment of the present invention, wherein the invention is implemented in a power plug, which can be placed in between the asset's power plug and the mains connection. This intermediate plug is fitted with electronics and software, enabling it to:

- communicate with central command centre;
- measure and administer power output;
- send data to central command centre or perform local analysis of data;
- cut (and re-establish) power.

Upon installation, the power plug will start an initiation phase. During this phase, the plug monitors and administers the asset's power usage, without performing any other actions. The collected data is communicated to a central control centre, where computational power will be available for analysis. Looking at figure 2, one can identify the operating system and all its elements. Element (1) is the thermal asset, participating as a demand response asset. Element (2) embodies the power plug and sits in between the asset and the mains connection (3). Finally, element (4) is the central command centre. The vertical arrows are electric connections, through which power can flow. The horizontal arrows represent communication between the power plug and the central command centre.

Depending on the type of asset, the repetitiveness of the power cycles may be dependent on the time of day on which the measurement is performed. A home-use refrigerator, for instance, will experience little disturbances during the night, whereas it will be regularly disturbed during daytime by the opening of its door and changes in its content. In order to filter out such disturbances, the analysis will initially be based on a series of highly repetitive cycles, characterizing the asset's basic duty cycle.

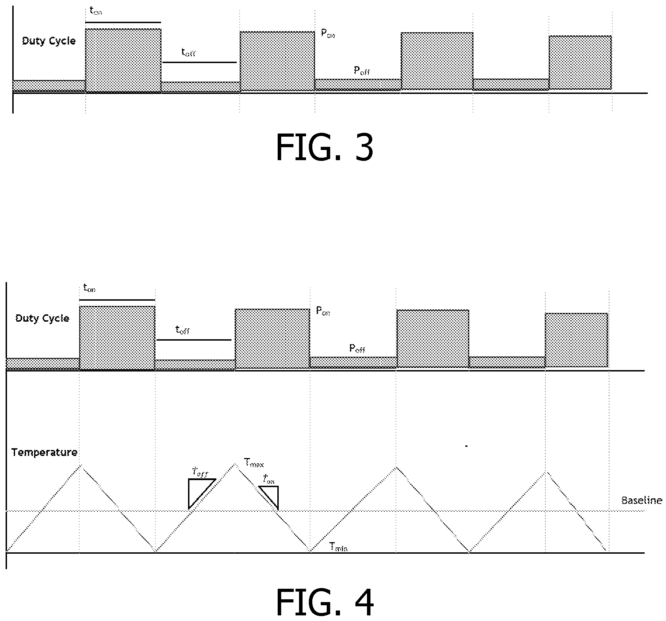

Figure 3 shows a sample of a duty cycle. A few important characteristics can be determined from such a duty cycle, the following being the most important:

1. Average on-time of cooling mechanism: $t_{on}$
2. Average off-time of cooling mechanism: $t_{off}$
3. Power consumption during active cooling: $P_{on}$
4. Residual power consumption: $P_{off}$

The on- and off-time of the cooling mechanism can be used to create an estimation of the normalized temperature in the refrigerator, which will be 1 (or $T_{n,max}$) when the cooling mechanism is turned on, and 0 ($T_{n,min}$), when the cooling is turned off again. Assuming linear temperature - time dependencies, the normalized cooling and heating rate can be determined as:

$$\dot{T}_{off} = \frac{T_{n,max} - T_{n,min}}{t_{off}} = \frac{1}{t_{off}}$$

$$\dot{T}_{on} = \frac{T_{n,min} - T_{n,max}}{t_{on}} = -\frac{1}{t_{on}}$$

Using this framework of equations, the temperature profile during subsequent duty cycles can be predicted.

Figure 4 shows the graph from figure 3 extended to include the temperature. After the initial phase, the plug will go into the operational phase. In this phase, the plug will keep monitoring, administrating and communicating the power usage of the asset. Besides the monitoring role, the plug will now receive instructions from the central control centre, regarding cutting and/or re-establishing the power to the asset. These instructions are partly based on the instantaneous imbalance price: whenever this price passes a certain threshold, shutting down the asset becomes beneficial. The asset however, can only be shut down when its internal processes are not harmfully disturbed. Also, shutting down is only possible when the asset is actually turned on at the moment of action. In the example of the refrigerator, this means shutting down is only possible when the cooling mechanism is turned on and when the internal temperature is below $T_{max}$.

When both conditions are met and the power is shut down, it is important to know when the temperature in the refrigerator reaches the upper limit. First of all, the normalized temperature at the start of the shut-down needs to be known. Using linear development of the internal temperature, the normalized temperature at the moment of shut-down can be computed as:

$$T_{n,SD} = 1 + \dot{T}_{on}\tilde{t}_{on}$$

In which $\tilde{t}_{on}$ represents the on-time of the last cooling cycle before shut-down. With the initial temperature known, the instantaneous normalized internal temperature equals:

$$T(\tilde{t}_{off}) = T_{n,SD} + \dot{T}_{off}\tilde{t}_{off}$$

In which $\tilde{t}_{off}$ equals the amount of time after the shut-down. Using these approximations, the system is able to guess the current temperature state of the asset and switch the system back on when the internal temperature reaches its dead band limit, proceeding with ordinary operations.

During this operational phase, the asset is modelled as if it behaves in accordance to the initial testing period. With both internal and external changes over time, the model's predictive qualities will deteriorate. In order to prevent such drifting behaviour, the model needs to be re-calibrated periodically. In order to re-calibrate, a new model will be created, by going back to the initiation phase after a set operational time.

Also, the asset is modelled based on periodically repeating duty cycles. Such cycles are only representative for situations in which external disturbances are very limited. In reality however, most thermal assets will be exposed to external disturbances: the opening of doors, sudden changes in the ambient temperature, changes in the thermal mass. In such situations, the temperature cannot be easily correlated to the instantaneous power consumption. Therefore, controlling the asset based on its power consumption becomes a delicate task. In order to prevent internal processes to run outside of their dead bands, the power plug will not interact with the asset's normal operation when said external disturbances are present. The external disturbances can be detected by analysing the most recent power consumption data. If the on- and off-times show significant deviations from their average values, this is interpreted as a strong indication of disturbing influences, and no more control actions will be performed until the duty cycle shows characteristics resembling the original model again.

In an embodiment, a thermal asset is not allowed to be switched on or off within a period after switching off or on. This can be caused by one or more of the following problems:

- the asset does not turn on or off;
- the asset is damaged;
- the asset wastes energy as the switch is inefficient.

For this it may be important to wait a period of time after the asset has been switched. To account for this the asset has to have enough time to wait for this period. Assuming that the waiting period is at least approximately known, the system can make sure that the internal state is far away enough form the state 0 or 1 to accommodate for this waiting period.
For example this point can be calculated by:

- dividing the time the asset has been on by the duty cycle;
- subtracting the time the asset has been on;
- the result should be greater than the waiting time.

For example if an asset has a duty cycle of 0.25 (25% on 75% off) and the asset has a waiting time of 3 minutes. The asset has to be switched on for 1 minute before switching off to make sure the waiting time can be achieved.

In another embodiment, the power plug does not use the original model in the operation phase. Instead, it only looks at the characteristics of the most recent duty cycle and creates an updated model. The original model is only used to compare the recent characteristics to the original ones, and determine whether disturbances are present. In this way, small deviations in the asset's operations, caused for instance by seasonal or day/night influences, are embraced in the updated model. When the differences between the updated model and the original model become significantly large, the power plug stops all operations and goes back into the initiation phase.

In another embodiment, the power plug makes use of the asset's default reaction on a short power-outage. In case of such an outage, it is common for thermal assets to start compensating directly upon recovery. For the refrigerator example, this means upon a power outage and recovery, it would immediately start cooling until the lower temperature limit is reached. When a thermal asset is in the low-usage portion of its duty cycle, it can be forced to shift to its high-usage behavior, by simulating a short power-outage. Simulation of such an outage yields no challenge for the current invention, since the power plug can simply cut and re-connect the asset's power. By exploitation of this asset behavior, the power plug is able to switch asset's on, besides the aforementioned ability to switch off an asset. With respect to demand-response, the current embodiment turns the standard one-way-switchable load into a two-way solution. This allows participation of the thermal asset in the imbalance markets in case of below-average electricity pricing.

In another embodiment, the power plug allows thermal assets to step out of their dead band, albeit within a certain extended bandwidth, whenever the potential earnings outweigh the disadvantageous effect on the asset's thermal state. By analyzing the asset's duty cycle, the specific type of asset (refrigeration, heating etc.) can be identified. After having classified the asset, a standardized allowance for dead band extensions can be applied.

In another embodiment the internal state is allowed to go out of the dead band, but by a restricted amount. For example going out of the dead band by 10% (internal state -0.1 or 1.1) can be considered as an acceptable situation under certain circumstances.
In an embodiment the amount of egress out of the normal state can be dependent on a price input, such as an electricity price. For example a higher price can justify allowing the system to move further out of the dead zone. For example a freezer should not be warmer than -18°C. If, however, one would allow this for a short period of time, this would have no significant impact on the goods in the freezer.

This extension of the temperature range can be realized by cutting the power for a longer time period than originally possible. This method implies that the extension can only be realized on one of the two temperature extremes, namely the one that can be trespassed by cutting power. Especially in case of extremely high imbalance fees, the earnings of extending the cut-power-period can outweigh the inconvenience it might cause. Of course, the energy savings by extending the cut-power-period will be made undone by the subsequent extended on-time, required to bring the normalized temperature back to the zero level. For short duty cycles (shorter than 15 minutes), the subsequent compensation might undo the created profits resulting from the original extension. To prevent this from happening, the compensation may be delayed by consequently cutting power before the zero-level normalized temperature is reached. This effectively translates the entire dead band towards the extended temperature range.

In another embodiment, predictions of the imbalance price are taken into account. Two types of predictions are of particular interest: those with very high and those with very low electricity prices. PTUs (Program Time Units) with such extreme prices offer ample opportunity for cost-efficient control actions. Therefore, it would be a shame if the controlled thermal asset's normalized temperature would allow very little space for control actions. To clarify: imagine the exemplary refrigerator used in previous embodiments. Whenever a high-priced PTU is coming up, the obvious desired action would be to cut power. When however the internal temperature at the start of the PTU is already in the neighborhood of $T_{max}$, the space for control will be limited, even when extending the maximum temperature and delaying the compensation stroke, as described in the aforementioned embodiment. Looking at the other extreme situation, with low prices and a starting temperature close to $T_{min}$, a similar issue occurs. The aforementioned procedure for turning on the cooling mechanism will no longer work, since the refrigerator will hardly perform any cooling before it reaches $T_{min}$ and stops cooling. To overcome loosing such opportunities, the system in this embodiment makes use of price predictions, coming from the central control centre. The thermal asset is controlled in such a way that prior to the extreme-price-PTU, the temperature bandwidth will be translated and shrunken by interventions from the power plug. In this way, the asset's internal temperature at the start of the extreme PTU will allow for a long control action, so that profits from the extreme pricing will be optimal. As mentioned earlier, such a long control action will be followed by a long opposite action, to restore the internal temperature. In case of short duty cycles, or long periods of extreme prices, this compensation stroke will be delayed, in order to preserve the gains from the control action.

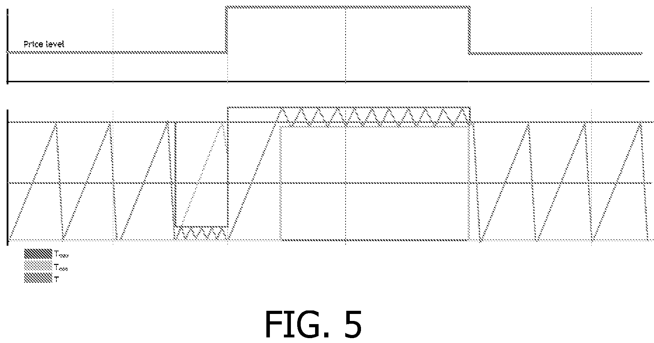

Figure 5 displays such a situation for the refrigerator example. As the top graph displays, the given scenario features two PTUs with relatively high pricing. To optimize earnings, the goal is to minimize energy use during this period. In order to do so, the temperature bandwidth is shrunken and moved downwards just before the start of the two middle PTUs. As a result, the two PTUs can be entered with a long power cut, saving energy. As shown in the figure, $T_{max}$ is extended with a few percent to maximize savings. If the asset were to exit the high price period on the low side of the normalized temperature spectrum, the savings would be compensated and therefore cancelled. As a countermeasure, a new narrow temperature band is introduced during the high price period. This ascertains exiting the high price period on a high normalized temperature, preserving the just created cost savings.

In one embodiment, the consumption-data is saved in a specific way, in order to reduce data size. Conventionally, one would save a timestamp and the according instantaneous power consumption on a regular basis, e.g. once per second. Over time, such a method would accumulate to a large data set. Moreover, many of the saved data points will be mere copies of their predecessors, since the power consumption is mostly a flat line. A more efficient way of using data can be reached by only saving data points right after a fluctuation in the power consumption. For the given example consumption in figure 4, the resulting measurements would only cover the corners of the displayed power consumption graph. By interpolation, the rest of the graph can be redeemed. In this way, the data size can be significantly reduced. The smaller data size is beneficial for transferring to the cloud for remote processing, as well as local model-fitting purposes.

In another embodiment, data collection, and subsequent analysis of the consumption data, is performed locally in the power plug. The power plug still requires an internet connection, in order to receive requests for steering actions, based on the electricity prices. Since the modelling of the asset is performed locally, this embodiment decides locally whether or not to allow steering actions. Therefore the current embodiment has to send feedback to the central control centre about whether or not a steering action was executed. By doing so, the central control centre is able to keep track of its imbalance actions.

As a further example, not forming part of the claimed subject-matter, a non-thermal asset is controlled using the discussed thermal model. There are several processes that can be modelled as thermal, for example pumping stations, pressure vessels, voltage of an electrical component, flow rate, chemical consistency of a mixture, luminosity of a light source, radiation of a nuclear element, height/altitude of an object, activity of a process, molarity of a mixture or velocity of an object.

**Claims**

1.  Method for determining a normalised actual temperature state associated with a thermal asset, wherein the temperature state is in a regular operating mode at a minimum at the beginning of the rise time and at a maximum at the end of the rise time, the method comprising:

    - determining, of an electric power consumption of the thermal asset which has said regular operating mode wherein it is repeatedly switched on and off with a predictable duty cycle:

        - a rise time in the regular operating mode;
        - a fall time in the regular operating mode;

    - defining the temperature state at the beginning of the rise time "0" and at the end of the rise time "1";
    - defining the normalised actual temperature state at a moment after the regular operating mode equal to:

        - the cumulative rise time since the end of the last completed fall time divided by the rise time in the regular operating mode; minus
        - the cumulative fall time since the end of the last completed fall time divided by the fall time in the regular operating mode.

2.  Method according to claim 1, comprising re-determining the rise time in the regular operating mode and the fall time in the regular operating mode after a predetermined time interval.

3.  Method for controlling the power consumption of a thermal asset, comprising:

    - determining the normalised actual temperature state associated with the thermal asset according to a method according to claim 1 or 2;
    - determining a maximum allowable exceedance of the normalised temperature state;
    - if the normalised actual temperature state is beneath the maximum exceedance, deciding that the power of the thermal asset may be temporarily cut off.

4.  Method according to claim 3, comprising using an energy price as an indicator for a grid load.

5.  Method according to claim 4, comprising temporarily disconnecting the thermal asset from the grid when the grid load is high.

6.  Method according to claim 5, where energy price predictions are used to prepare the thermal asset for load shedding in case of high grid load.

7.  Apparatus for controlling a thermal asset, comprising:

    - a first power connection, for receiving power from a grid;
    - a second power connection, for delivering power to a thermal asset;
    - a power-measurement device for measuring the power consumption of the thermal asset;
    - a computing device, for performing a method according to claim 1 or 2 based on values determined by the power-measurement device.

8.  Apparatus according to claim 7, embodied as a switchable power plug comprising:

    - an on-board micro-chip;
    - a power consumption data storage;
    - an internet connection, wherein the internet connection provides a connection to a computing device providing grid load information such as instantaneous electricity prices.

9.  Apparatus according to claim 8, wherein said on-board micro-chip is arranged for analysing data locally.

10. Apparatus according to previous claims 7-9 configured to receive instructions from a control system regarding when and for how long the power of the thermal asset has to be switched off or on.

11. Apparatus according to any of the previous claims 7-10, configured for switching on the thermal asset for creating a two-way demand response device, which can both shed and increase electric load.

12. Apparatus according to previous claims 7-11, wherein power consumption data is only saved when a significant deviation in power consumption is detected.

13. Apparatus according to previous claims 7-12, comprising a model of a thermal asset, based on its historic power cycles, including at least the average on and off time during the power cycles, as well as respective power consumption levels during these periods.

14. System for controlling a thermal asset, comprising:

    - an apparatus according to any of claims 7-13;

- a control system for controlling the power according to a method of any of claims 3-6.

## Patentansprüche

1.  Verfahren zum Bestimmen eines normalisierten aktuellen Temperaturzustands im Zusammenhang mit einem thermischen Vermögenswert, wobei sich der Temperaturzustand in einem regulären Betriebsmodus zu Beginn der Anstiegszeit bei einem Minimum und am Ende der Anstiegszeit bei einem Maximum befindet, wobei das Verfahren umfasst:

    - Bestimmen des Stromverbrauchs eines thermischen Vermögenswertes, der den regulären Betriebsmodus aufweist, wobei er wiederholt mit einem vorhersehbaren Tastverhältnis ein- und ausgeschaltet wird:

        - einer Anstiegszeit im regulären Betriebsmodus;
        - einer Abfallzeit im regulären Betriebsmodus;
        - Definieren des Temperaturzustands zu Beginn der Anstiegszeit "0" und am Ende der Anstiegszeit "1";
        - Definieren des normalisierten aktuellen Temperaturzustands zu einem Zeitpunkt nach dem regulären Betriebsmodus gleich:

            - der kumulativen Anstiegszeit seit dem Ende der letzten abgeschlossenen Abfallzeit dividiert durch die Anstiegszeit im regulären Betriebsmodus; minus
            - der kumulativen Abfallzeit seit dem Ende der letzten abgeschlossenen Abfallzeit dividiert durch die Abfallzeit im regulären Betriebsmodus.

2.  Verfahren nach Anspruch 1, umfassend das Neubestimmen der Anstiegszeit im regulären Betriebsmodus und der Abfallzeit im regulären Betriebsmodus nach einem vorbestimmten Zeitintervall.

3.  Verfahren zum Steuern des Stromverbrauchs eines thermischen Vermögenswertes, umfassend:

    - Bestimmen des normalisierten aktuellen Temperaturzustands im Zusammenhang mit dem thermischen Vermögenswert gemäß einem Verfahren nach Anspruch 1 oder 2;
    - Bestimmen einer maximal zulässigen Überschreitung des normalisierten Temperaturzustands;
    - wenn der normalisierte aktuelle Temperaturzustand unterhalb der maximalen Überschreitung liegt, Entscheiden, dass die Stromversorgung des thermischen Vermögenswertes vorübergehend abgeschaltet werden kann.

4.  Verfahren nach Anspruch 3, umfassend die Verwendung eines Strompreises als Indikator für eine Netzlast.

5.  Verfahren nach Anspruch 4, umfassend die vorübergehende Trennung des thermischen Vermögenswertes vom Netz, wenn die Netzlast hoch ist.

6.  Verfahren nach Anspruch 5, wobei Strompreisprognosen dazu verwendet werden, den thermischen Vermögenswert bei hoher Netzlast für eine Lastverringerung vorzubereiten.

7.  Vorrichtung zum Steuern eines thermischen Vermögenswertes, umfassend:

    - einen ersten Stromanschluss zum Empfangen von Strom aus einem Netz;
    - einen zweiten Stromanschluss zum Liefern von Strom an einen thermischen Vermögenswert;
    - eine Leistungsmessvorrichtung zum Messen der Leistungsaufnahme des thermischen Vermögenswertes;
    - eine Rechenvorrichtung zum Durchführen eines Verfahrens nach Anspruch 1 oder 2 basierend auf Werten, die durch die Energiemessvorrichtung bestimmt werden.

8.  Vorrichtung nach Anspruch 7, realisiert als schaltbarer Netzstecker, umfassend:

    - einen eingebauten Mikrochip;
    - einen Datenspeicher für den Stromverbrauch;
    - eine Internetverbindung, wobei die Internetverbindung eine Verbindung zu einer Rechenvorrichtung bereitstellt, die Netzlastinformationen wie z. B. momentane Strompreise bereitstellt.

9.  Vorrichtung nach Anspruch 8, wobei der eingebaute Mikrochip zum lokalen Analysieren von Daten eingerichtet ist.

10. Vorrichtung nach den vorhergehenden Ansprüchen 7-9, die dazu eingerichtet ist, von einem Steuerungssystem Anweisungen zu erhalten, wann und wie lange der Strom des thermischen Vermögenswertes aus- oder eingeschaltet sein muss.

11. Vorrichtung nach einem der vorhergehenden Ansprüche 7-10, die zum Einschalten des thermischen Vermögenswertes eingerichtet ist, um eine Zweiwege-Anforderungsreaktionsvorrichtung zu erstellen, die die elektrische Last sowohl verringern als auch erhöhen kann.

**12.** Vorrichtung nach den vorhergehenden Ansprüchen 7-11, wobei Daten über den Stromverbrauch nur dann gespeichert werden, wenn eine wesentliche Abweichung im Stromverbrauch festgestellt wird.

**13.** Vorrichtung nach den vorhergehenden Ansprüchen 7-12, umfassend ein Modell eines thermischen Vermögenswertes, basierend auf dessen früheren Stromzyklen, einschließlich mindestens der durchschnittlichen Ein- und Ausschaltzeit während der Stromzyklen sowie der jeweiligen Stromverbrauchswerte während dieser Zeitspannen.

**14.** System zum Steuern eines thermischen Vermögenswertes, umfassend:

- eine Vorrichtung nach einem der Ansprüche 7-13;
- ein Steuerungssystem zum Steuern der Stromversorgung gemäß einem Verfahren nach einem der Ansprüche 3-6.

**Revendications**

**1.** Procédé pour déterminer un état de température réelle normalisée associé à une installation thermique, cet état de température étant dans un mode de fonctionnement régulier à un minimum au commencement du temps de montée et à un maximum à la fin du temps de montée, ce procédé comprenant :

- la détermination, relativement à une consommation d'énergie électrique de l'installation thermique qui a ledit mode de fonctionnement régulier, celle-ci étant connectée et déconnectée de façon répétée avec un cycle de service prévisible :

- d'un temps de montée dans le mode de fonctionnement régulier ;
- d'un temps de chute dans le mode de fonctionnement régulier ;
- la définition de l'état de température au commencement du temps de montée "0" et à la fin du temps de montée "1" ;
- la définition de l'état de température réelle normalisée à un moment après que le mode de fonctionnement régulier est égal au :

- temps de montée cumulatif depuis la fin du dernier temps de chute terminé divisé par le temps de montée dans le mode de fonctionnement régulier ; moins
- le temps de chute cumulatif depuis la fin du dernier temps de montée terminé divisé par le temps de chute dans le mode de fonctionnement régulier ;

**2.** Procédé selon la revendication 1, comprenant la redétermination du temps de montée dans le mode de fonctionnement régulier et du temps de chute dans le mode de fonctionnement régulier après un intervalle de temps prédéterminé.

**3.** Procédé pour contrôler la consommation d'énergie d'une installation thermique, comprenant :

- la détermination de l'état de température réelle normalisée associé à l'installation thermique conformément à un procédé selon la revendication 1 ou 2 ;
- la détermination d'un dépassement maximum admissible de l'état de température normalisée ;
- si l'état de température réelle normalisée est en dessous du dépassement maximum, la prise de décision que l'énergie de l'installation thermique peut être coupée temporairement.

**4.** Procédé selon la revendication 3, comprenant l'utilisation d'un prix d'énergie comme indicateur d'une charge du réseau électrique.

**5.** Procédé selon la revendication 4, comprenant la déconnexion temporaire de l'installation thermique du réseau électrique lorsque la charge du réseau électrique est élevée.

**6.** Procédé selon la revendication 5, dans lequel les prédictions de prix de l'énergie sont utilisées pour préparer l'installation thermique pour le délestage de la charge en cas de charge élevée du réseau électrique.

**7.** Appareil pour commander une installation thermique, comprenant :

- une première connexion électrique, pour recevoir de l'énergie d'un réseau électrique ;
- une deuxième connexion électrique, pour fournir de l'énergie à une installation thermique ;
- un dispositif de mesure d'énergie pour mesurer la consommation d'énergie de l'installation thermique ;
- un dispositif informatique, pour exécuter un procédé selon la revendication 1 ou 2 en se basant sur des valeurs déterminées par le dispositif de mesure d'énergie.

**8.** Appareil selon la revendication 7, réalisé comme une prise d'alimentation commutable comprenant :

- une micropuce intégrée ;
- un dispositif de stockage de données de consommation d'énergie ;

- une connexion Internet, cette connexion Internet fournissant une connexion à un dispositif informatique fournissant des informations sur la charge du réseau électrique telles que des prix d'électricité instantanés.

**9.** Appareil selon la revendication 8, dans lequel ladite micropuce intégrée est agencée de façon à analyser des données localement.

**10.** Appareil selon les revendications précédentes 7 à 9, configuré de façon à recevoir des instructions d'un système de commande concernant quand et combien de temps l'énergie de l'installation thermique doit être déconnectée ou connectée.

**11.** Appareil selon l'une quelconque des revendications précédentes 7 à 10, configuré de façon à connecter l'installation thermique pour créer un dispositif bidirectionnel de réponse à la demande, qui peut à la fois délester et augmenter une charge électrique.

**12.** Appareil selon les revendications précédentes 7 à 11, dans lequel les données de consommation d'énergie ne sont sauvegardées que quand un écart important dans la consommation d'énergie est détecté.

**13.** Appareil selon les revendications précédentes 7 à 12, comprenant un modèle d'une installation thermique, basé sur ses cycles d'énergie historiques comprenant au moins le temps de connexion et de déconnexion moyen pendant les cycles d'énergie, de même que des niveaux de consommation d'énergie respectifs pendant ces périodes.

**14.** Appareil pour commander une installation thermique, comprenant :

    - un appareil selon une quelconque des revendications 7 à 13 ;
    - un système de commande pour commander l'énergie conformément à un procédé selon l'une quelconque des revendications 3 à 6.

FIG. 1

FIG. 2

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040093125 A1